# EUROPEAN PATENT SPECIFICATION

(11) **EP 1 500 326 B1**
(45) Date of publication and mention of the grant of the patent: **15.08.2007**
(21) Application number: 03016525.2
(22) Date of filing: 23.07.2003
(51) Int. Cl.: A01G 3/00, B27B 25/04

(54) **Improvements applied to continuous linear square-fitting machine used in the milling proces of coconut endocarp**
Verbesserungen an einer linearen rechteckformenden Maschine zum Einsatz in Fräsverfahren der Endokarp von Kokosnüssen
Améliorations d'une linéaire machine pour former des rectangles utilisée dans des procédés de fraisage de l'endocarpe de noix de coco

(43) Date of publication of application: 26.01.2005
(73) Proprietor: Franco Queiroz, Eduardo, Maceio, Alagoas, CEP 57033-000 (BR)
(72) Inventor: Franco Queiroz, Eduardo, Maceio, Alagoas, CEP 57033-000 (BR)
(74) Representative: Pereira da Cruz, Joao

(56) References cited:
- BR-A- 2 207
- DE-B- 1 225 840
- US-A- 4 068 549

## Description

### TECHNICAL FIELD

This present invention concerns continuous linear square-fitting machine used in the milling process of the coconut endocarp *(Coco nucifera L.)*; more particularly it relates to improvements applied to said machine, which allows a right arrangement of threads of endocarp obtained during the milling process, keeping them aligned with the cutting knifes, so that tablets from the coconut shell is obtained on the square, improving the applicability conditions of said tablets within the most variable kinds, such as furniture, automotive, building, and general decoration industries.

### BACKGROUND OF THE INVENTION

As it is known, the coconut is the fruit of the coconut palm and is one of the largest nuts in the vegetal domain, being consisted of the epicarp - a smooth and viscous epidermis, the mesocarp - fibrous layer, and the endocarp - outer membrane, which is known by its feature of being a hard shell with loosen and tangled fibers.

The coconut, along the years, has reached high rates of good use, and its water under natural condition may be exploited or, further, may be industrially bottled, besides the processing of the pulp, coconut milk, rasped coconut, sweets, and a series of utilization of the coconut fiber, among other uses.

In order to expand the good use of the coconut, the applicant filed a Brazilian patent application No. PI 0002207 on May 2, 2000 - which provided a milling process of the coconut endocarp, particularly the *Coco Nucifera L.* species, being this process comprised by a set of machines made of slicer and square-fitting machinery, which is effective enough to mould a half of the coconut endocarp, which is naturally concave/convex, into tablets of variable dimensions and shapes to be sold in bulk, or with multiple shapes and sizes. The first slicer machine mould the half of the coconut endocarp into threads of parallel sides, whilst the square-fitting machine mould the threads produced by the slicer machine into tablets.

The tablets may be shaped in different ways such as rhombus, rectangular, square, trapezoidal, hexagonal, round, triangular, heptagonal, octagonal and irregular. They further keep the original molecule structure of the endocarp and have an abrasive, mechanical and chemical resistance inherent to said original molecule structure. Side by side placed, they form plates which may be commercialized and applied to curve or irregular surfaces since their flexibility feature, besides they have various applications on objects like bottoms, handles, decoration in general, complementary clothing, etc.

Either in the slicing and square-fitting machines, cuts are automatically done in parallel and right angles, thus making certain the production of uniform tablets.

The operational system, indicated in the mentioned document, is assembled in such a way that the endocarps, reaching the production phase, may be half cut, being put in the conveyor belt. They are lead to a capture set, comprised of a tooth wheel and of a rubber wheel, fixing the endocarps to the first cut through parallel saws, generating a central thread and two end pieces which are taken and threw into a second capture set, producing new threads and thus successively, until all parts of the endocarp be cut in threads.

Said threads are taken and transferred to a square-fitting machine where they are captured by a endless screw thread that supplies a principal flywheel comprised of inlets and a clinging system which fixes the threads in such a position that they are allowed to pass through the cut sets, thus producing the tablets. Every chip and powder resulting from the process are sold in bulk, in order to be used for other purposes.

As it may be understood from the above description, the invention process already applied for mainly intended the obtainment of tablets from the coconut endocarp, aiming to provide a new material dedicated to the coating of furniture pieces, decoration and building, among other equivalent applications.

As described, the process uses a machine named square-fitting machine, provided with cutting knifes applied to as dimensional equalizers of the threads obtained subsequently to the slicing of the coconut endocarp, in order to provide uniform tablets.

However, during the development of the process, applicant noticed the need of constructively changing the machine, intending to simplify the arrangement of the threads before the slicing of the square-fitting machine knifes, mainly in the portion whereby a longitudinal advancement of the threads occurs - and this, in the former machine, led to problems such as the gripping of the threads into the fastening system which consequently puts the regular ongoing course of the threads in a jam.

Another solved problem, as a consequence, is the fact that the duration of the stops for maintenance of the machinery was reduced, since the applied changes made the system much more simple, with only linear, continuous and circular motions, such as a transporting belt.

### BRIEF DESCRIPTION OF THE DRAWINGS

In order to complement the present description, so that a better understanding on the features of the present invention is obtained, and according to a preferred way of practical construction of the same, a set of the attached drawings follows the description, whereby, through a simplified mode, it has been reached the below particulars:
Figure 1 is a side view of the continuous linear square-fitting machine, assembled right below the conveyor belt coming out from the slicer machine (not illustrated);
Figure 2 is a top view of the square-fitting machine and the assembly sequence of the conveyor chains;

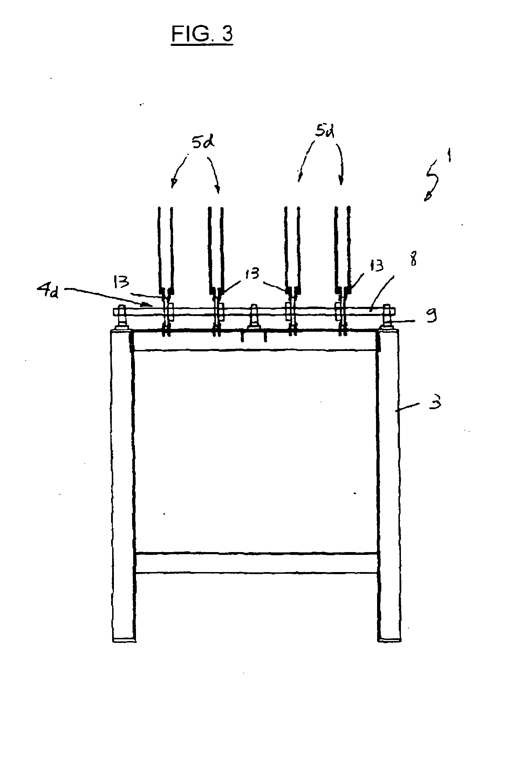

Figure 3 is a scheming front view of the square-fitting machine, indicating the system of conveyor chains and the cutting system;

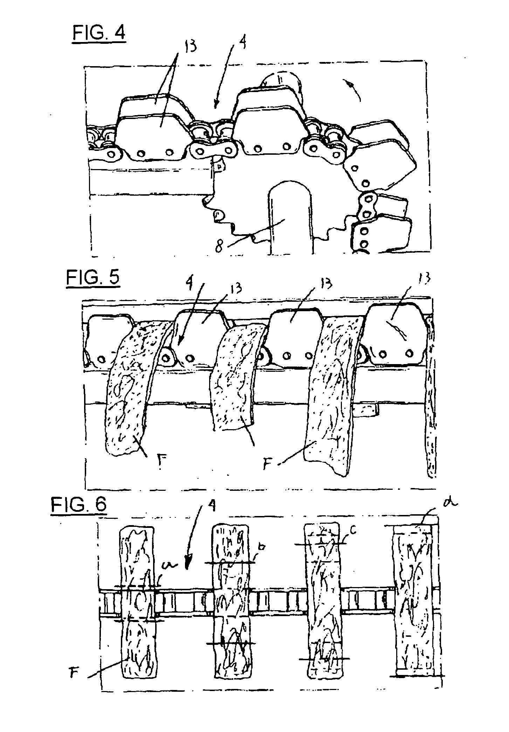

Figure 4 indicates a partial and enlarged detail of one of the conveyor chains, pointing out the leading teeth.
Figure 5 indicates a detailed view and a side perspective of the conveyor chain leading threads of the coconut endocarp to one of the cutting sections;
Figure 6 is a top view of the previous figure, and
Figure 7 indicates a serie of tablets aligned side-by-side, pointing out the square obtained through the innovated machine.

### DETAILED DESCRIPTION OF THE INVENTION

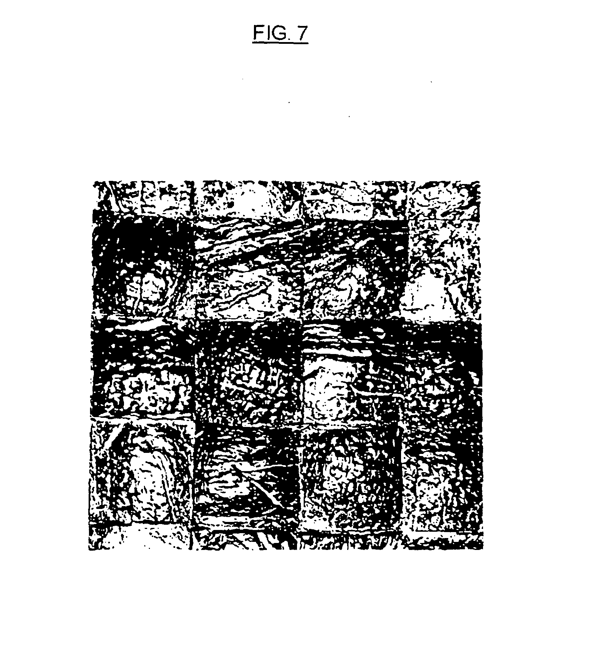

As regards to the illustrated drawings, the present invention relates to a continuous linear square-fitting machine (1), particularly applied to the milling process of coconut endocarps, which were processed by a slicer machine (A) (not illustrated), producing threads (F) which are led to the square-fitting machine (1) through rolling conveyor belt (T); said square-fitting machine being used to produce tablets (P) on the square from the threads (F) of the coconut endocarp (figure 7).

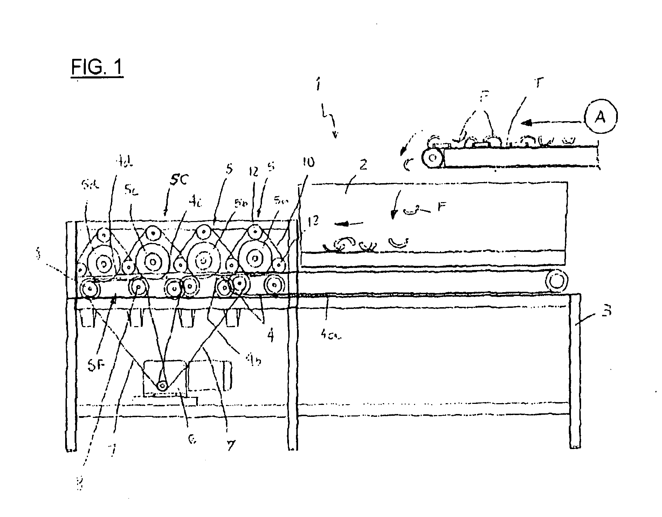

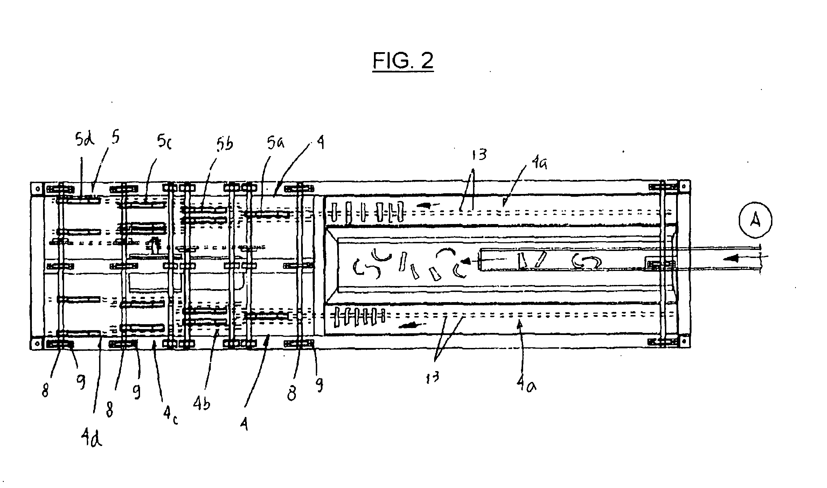

In accordance with the present invention and with the figures 1 and 2, through a system of rolling conveyor belts (T), the threads (F) come close to the deposit (2) of the square-fitting machine (1), which is basically comprised by a metal structure (3) where a fixing and conveyor system (SF) is installed through conveyor fixing chains (4) and a cutting system (SC) by circular saws (5).

Before the tablets (F) passing through the first saw (5a), they are downwards compressed by a set of straps (10) and pulleys (12), guiding said threads to be exactly placed on the square; arrangement which is made possible due to the distribution of teeth (13), positioned in a spaced way and at 90° towards the chains (4); teeth which are preferred assembled by a pair of trapezoidal blades, fixed in the external faces of the links of the chains (4), guiding the threads (F) to be placed at 90° towards the teeth of the saw of the cutting knifes (5).

The conveyor chains (4a) with teeth (13) will catch the threads (F) coming from the deposit (2) at a 90° position, making them to pass through the first double saws (5a), making the first cut (a), going to another set of chains (4b) with teeth (13) which will catch, at a 90° position, the lateral pieces of the threads (F) remained from the first cut (a), and leading them to the next set of saws (5b) making the second cut (b) and thus successively with the other conveyor chains (4c, 4d) and corresponding cutting saws (5c, 5d), effecting the subsequent cuts (c) and (d).

Figure 7 indicates, in detail, the tablets obtained through the continuous linear square-fitting machine; and, only for complementing purposes, the powder generated from the cutting production may be mixed to natural or synthetic resins and to other sawing powder generated through the processing of other kind of coconut, such as *Babassu, Dendê* and even the chip of the coconut, also resulting from the same process.

Despite the detailed invention, it is important to state that the same does not limit the applicability to the details and phases herein described. The invention is subject to other modalities and to being put into practice or executed in a variety of ways within the scope of the claims. It must be understood that the terminology herein used simply aims the description, not the limitation.

## Claims

1. Continuous linear square-fitting machine, particularly applied to the milling process of coconut endocarps, which were processed by a slicer machine (A), producing threads (F) which are led to the deposit (2) of the square- fitting machine (1) through the rolling conveyer belt (T);
said square-fitting machine (19) featured by being comprised by a metal structure (3) where a conveyor fixing system (SF) of threads (F) is installed through fixing conveyor chains (4) with teeth (13) and cutting system (SC) by circular saws (5) and a set of straps and pulleys for placing said threads exactly on the square;
through the motor reducer set (6) and secondary transmission chains (7), the axes (8) rotate on bearings (9) making the fixing conveyor chains (4) mechanically put into motion, to lead the threads (F) passing through the first saw (5a), the same are downwards compressed by said set of straps (10) and pulleys (12), making said threads to be exactly placed on the square, arrangement which is made possible due to the distribution of teeth (13), positioned in a spaced way and at 90° towards the chains (4).

2. Continuous linear square-fitting machine in accordance with claim 1, featured by the fact that the teeth (13) are assembled by pair of trapezoidal blades.

3. Continuous linear square-fitting machine, in accordance with the claims 1 and 2 above, featured by the fact that the teeth (13) are fixed in the external face of the links of the chains (4).

4. Continuous linear square-fitting machine, in accordance with the previous claims, featured by the fact that the teeth (13) keep the threads (F) positioned at 90° towards the teeth of the saw of the cutting knifes (5) of the cutting system (SC).

5. Continuous linear square-fitting machine, in accordance with the previous claims, featured by the fact that the threads (F) enter the machinery through the conveyor chains (4a) with teeth (13) which will catch, at 90° position, the threads (F) coming from the deposit (2), passing through the first double saws (5a), going to another set of chain (4b) with teeth (13) which will catch, at 90° position, the lateral pieces of the threads (F) remained from the first cut, and leading them to the next set of saws (5b), and thus successively with the other conveyor chains (4c, 4d) and corresponding cutting saws (5c, 5d).

6. Continuous linear square-fitting machine, in accordance with the previous claims, featured by the fact that the coconut endocarp may be used for coating in the most variable ways of applications, being transformed into tablets (P), obtained from the machine (1), which are produced on square and may be shaped into different ways such as rhombus, rectangular, square, trapezoidal, hexagonal, round, triangular, heptagonal, octagonal and irregular; they further keep the original molecule structure of the endocarp and have an abrasive, mechanical and chemical resistance inherent to said original molecule structure; Side by side placed, they form plates which may be commercialized and applied to curve or irregular surfaces since their flexibility feature, besides they have various applications on objects like bottoms, handles, decoration in general, complementary clothing, etc.

## Patentansprüche

1. Kontinuierliche, lineare Rechteckformungsmaschine, die insbesondere auf den Fräsprozess des Endokarps von Kokosnüssen angewendet wird, die durch eine Schneidemaschine (A) verarbeitet wurden, die Fasern (F) erzeugt, die durch ein Rollenförderband (T) zur Ablage (2) der Rechteckformungsmaschine (1) geführt werden;
wobei die Rechteckformungsmaschine (19) **dadurch gekennzeichnet ist, dass** sie umfasst: eine Metallstruktur (3), an der ein Beförderungsfixierungssystem (SF) für Fasern (F) installiert ist, Fixierungsbeförderungsketten (4) mit Zähnen und ein Schneidsystem (SC) mit kreisförmigen Sägen (5) und ein Satz von Riemen und Riemenscheiben zum genauen Anordnen der Fasern auf dem Rechteck;
einen Motorreduziersatz (6) und sekundäre Übertragungsketten (7), wobei sich die Wellen (8) auf Lagern (9) drehen, um die Fixierungsbeförderungsketten (4) mechanisch in Bewegung zu setzen, um die Fasern . (F) durch die erste Säge (5a) zu führen, wobei sie durch den Satz von Riemen (10) und Riemenscheiben (12) nach unten zusammengedrückt werden, wodurch die Fasern auf dem Rechteck exakt angeordnet werden, wobei die Anordnung aufgrund der Verteilung von Zähnen (13), die beabstandet und unter 90° zu den Ketten (4) angeordnet sind, ermöglicht wird.

2. Kontinuierliche, lineare Rechteckformungsmaschine nach Anspruch 1, **dadurch gekennzeichnet, dass** die Zähne (13) durch Paare von trapezförmigen Klingen gebildet sind.

3. Kontinuierliche, lineare Rechteckformungsmaschine nach Anspruch 1 oder 2, **dadurch gekennzeichnet, dass** die Zähne (13) in der äußeren Fläche der Glieder der Ketten (4) fixiert sind.

4. Kontinuierliche, lineare Rechteckformungsmaschine nach den vorhergehenden Ansprüchen, **dadurch gekennzeichnet, dass** die Zähne (13) die Fasern (F) unter 90° zu den Zähnen der Säge der Schneidmesser (5) des Schneidsystems (SC) halten.

5. Kontinuierliche, lineare Rechteckformungsmaschine nach den vorhergehenden Ansprüchen, **dadurch gekennzeichnet, dass** die Fasern (F) in die Maschine über Förderketten (4a) eintreten, die Zähne (13) besitzen, die in der 90°-Position die Fasern (F) ergreifen, die von der Ablage (2) ankommen, wobei sich die Fasern durch die ersten Doppelsägen (5a) bewegen und zu einem weiteren Satz von Ketten (4b) gelangen, die Zähne (13) besitzen, die in der 90°-Position die seitlichen Teile der Fasern (F), die von dem ersten Schnitt übrig bleiben, einfangen, um die Fasern zum nächsten Satz von Sägen (5b) und somit nacheinander zu den anderen Beförderungsketten (4c, 4d) und den entsprechenden Schneidsägen (5c, 5d) zu führen.

6. Kontinuierliche, lineare Rechteckformungsmaschine nach den vorhergehenden Ansprüchen, **dadurch gekennzeichnet, dass** das Endokarp der Kokosnuss in unterschiedlichsten Anwendungen zum Beschichten verwendet werden kann und dabei in Tafeln (P) transformiert wird, die von der Maschine (1) erhalten werden, die rechteckig produziert werden, jedoch auch auf andere Weisen geformt werden können, etwa wie ein Rhombus, ein Rechteck, ein Quadrat, ein Trapez, ein Sechseck, ein Kreis, ein Dreieck, ein Siebeneck, ein Achteck und eine unregelmäßige Form; wobei die ursprüngliche Molekülstruktur des Endokarps beibehalten wird, wobei es einen Widerstand gegen Abrieb, mechanische und chemische Einwirkungen besitzt, der der ursprünglichen Molekülstruktur inhärent wobei sie nebeneinander angeordnet Platten bilden, die kommerzialisiert werden können und auf gekrümmte oder unregelmäßige Oberflächen aufgebracht werden können, da sie flexibel sind, außerdem besitzen sie verschiedene Anwendungen auf Gegenstände wie Böden, Griffe, Dekoration im Allgemeinen, ergänzende Verkleidung und dergleichen.

## Revendications

1. Machine linéaire continue pour former des carrés, appliquée en particulier au processus de broyage des endocarpes de noix de coco qui ont été traités par une machine à trancher (A), en produisant des fils (F) qui sont menés au dépôt (2) de la machine pour former des carrés (1) par l'intermédiaire d'un convoyeur à bande roulant (T) ;
ladite machine pour former des carrés (19) étant **caractérisée par le fait qu'**elle est constituée par une structure métallique (3) où un système de fixation et de convoyeur (SF) de fils (F) est installé par l'intermédiaire de chaînes de fixation de convoyeur (4) avec des dents (13) et un système tranchant (SC) par scies circulaires (5), et un ensemble de courroies et de poulies de manière à placer lesdits fils exactement sur le carré ;
par l'intermédiaire d'un ensemble de réduction de moteur (6) et de chaînes de transmission secondaires (7), les axes (8) tournent sur des roulements (9), ce qui a pour effet de mettre les chaînes du convoyeur de fixation (4) mécaniquement en mouvement, pour amener les fils (F) à passer à travers la première scie (5a), ces derniers étant comprimés vers le bas par ledit ensemble de courroies (10) et de poulies (12); en plaçant exactement lesdits fils sur le carré, agencement qui est rendu possible en raison de la répartition des dents (13), placées d'une manière espacée et à 90° vers les chaînes (4).

2. Machine linéaire continue pour former des carrés selon la revendication 1, **caractérisée par le fait que** les dents (13) sont assemblées par paires de lames trapézoïdales.

3. Machine linéaire pour former des carrés selon l'une quelconque des revendications 1 ou 2, **caractérisée par le fait que** les dents (13) sont fixées dans la face extérieure des maillons des chaînes (4).

4. Machine linéaire continue pour former des carrés selon l'une quelconque des revendications précédentes, **caractérisée par le fait que** les dents (13) gardent les fils (F) positionnés à 90° vers les dents de scie des couteaux tranchants (5) du système tranchant (SC).

5. Machine linéaire continue pour former des carrés selon l'une quelconque des revendications précédentes, **caractérisée par le fait que** les fils (F) pénètrent dans la machinerie par l'intermédiaire de chaînes de convoyeur (4a) avec des dents (13) qui saisiront, sous une position de 90°, les fils (F) provenant du dépôt (2), en passant à travers les premières doubles scies (5a), en allant à un autre ensemble de chaînes (4b) avec des dents (13) qui saisiront, sous une position de 90°, les parties latérales des fils (F) restées après la première coupe, et en les amenant à l'ensemble suivant de scies (5b), et ainsi successivement avec les autres chaînes de convoyeur (4c, 4d) et les scies tranchantes correspondantes (5c, 5d).

6. Machine linéaire continue pour former des carrés selon l'une quelconque des revendications précédentes, **caractérisée par le fait que** l'endocarpe de noix de coco peut être utilisée en tant que revêtement dans de nombreux modes d'applications, en étant transformé en pastilles (P), obtenues à partir de la machine (1), qui sont produites sur le carré et peuvent être formées pour prendre différentes formes telles qu'en losange, en rectangle, en carré, en trapèze, en hexagone, en cercle, en triangle, en heptagone, en octogone et en une forme irrégulière, et elles conservent de plus la structure moléculaire originale de l'endocarpe et présentent une résistance abrasive, mécanique et chimique inhérente à ladite structure moléculaire originale ; placées côte à côte, elles forment des plaques qui peuvent être commercialisées et appliquées sur des surfaces courbes ou irrégulières en raison de leur caractéristique de souplesse, sans compter qu'elles offrent diverses applications sur des objets comme des fonds, des poignées, en décoration en général, en habillement complémentaire, etc.
